# EUROPEAN PATENT APPLICATION

(11) **EP 3 327 089 A1**
(43) Date of publication of application: **30.05.2018**
(21) Application number: 16827704.4
(22) Date of filing: 14.07.2016
(51) Int. Cl.: C09B 67/08, C09C 3/10, C09D 11/037

(54) **FUNCTIONAL PARTICLE PIGMENT**

(30) Priority: 17.07.2015 JP 2015143171
(71) Applicant: Mitsubishi Pencil Co., Ltd., Tokyo 140-8537 (JP)
(72) Inventor: ICHIKAWA Shuji, Yokohama-shi Kanagawa 221-8550 (JP)
(74) Representative: Vossius & Partner Patentanwälte Rechtsanwälte mbB
(86) International application number: PCT/JP2016/070825
(87) International publication number: WO 2017/014144

(57) **Abstract**

Provided is a functional particle pigment which can suitably be used as a coloring material for thermosensitive recording materials, inks for writing instruments, inks for stamps, inks for ink jet, inks for printing and the like and which is excellent in a chemical resistance without damaging prescribed performances such as a preservability, a light fastness, a coloring property and the like. The functional particle pigment described above includes, for example, a functional particle pigment containing at least a dye, wherein an outside of the pigment is coated with an olefin base resin.

## Description

### Technical Field

The present invention relates to a functional particle pigment having an excellent chemical resistance.

### Background Art

Functional particle pigments which can be used as coloring materials for thermosensitive recording materials, inks for writing instruments, inks for stamps, inks for ink jet, inks for printing and the like have so far been known. In the above functional particle pigments, the performances thereof (storing property, light fastness, coloring property and the like) have to be controlled as desired so that they meet the use fields.

Known as technologies for enhancing the performances of the functional particle pigments are, for example, 1) a microcapsule characterized by that a capsule wall is formed by a first polymer component and that the surface of the capsule wall described above is modified by a second polymer component formed by using a monomer having an ethylenically unsaturated bond, and a production method for the same (refer to, for example, a patent document 1), 2) a reversible thermally discoloring microcapsule pigment containing in a microcapsule a reversible thermally discoloring composition which turns into a coloring state from a decoloring state by heating and turns into a decoloring state from a coloring state by cooling and which comprises (a) an electron donating color developing organic compound, (b) a hydroxybenzoic acid ester compound represented by a specific formula and a hydroxyphenylacetic acid ester compound represented by a specific formula as electron accepting compounds, (c) a compound selected from chain hydrocarbons, alicyclic hydrocarbons, aromatic hydrocarbons and halogenated hydrocarbons as a reaction medium reversibly causing electron donating and electron accepting reactions by the compounds (a) and (b) described above, and (d) a styrene base compound having a softening point of 5°C or higher and a weight average molecular weight of 200 to 100,000 (refer to, for example, a patent document 2), 3) a microcapsule pigment containing in a microcapsule a photochromic material comprising a photochromic compound, a styrene base oligomer having a weight average molecular weight of 5000 or less or an acryl base oligomer having a weight average molecular weight of 12000 or less, and a polymer having a weight average molecular weight of 10000 to 100000 (refer to, for example, a patent document 3), and the like.

However, in the microcapsule pigments described in the patent documents 1 to 3, the problem that they are poor in a chemical resistance in using the microcapsule pigments containing the dyes is involved therein. For example, the dyes are broken under a condition in which some kind of acids and solvents is present, and the functions thereof as coloring materials are lost in certain cases.

### Related Art Documents

### Patent documents

Patent document 1: JP-A 2004-337839 (claims, examples and the like)
Patent document 2: JP-A 2014-84454 (claims, examples and the like)
Patent document 3: JP-A 2014-132061 (claims, examples and the like)

### SUMMARY OF THE INVENTION

### Problems to be Solved by the Invention

In light of the problems on the conventional technologies described above, the present invention tries to solve them, and an object thereof is to provide a functional particle pigment having an excellent chemical resistance.

In light of the conventional problems described above, intense researches repeated by the present inventors have resulted in finding that a functional particle pigment which meets the object described above is obtained by coating an outside of the pigment of a functional particle pigment containing at least a dye with a resin having specific physical properties. Thus, they have come to complete the present invention.

That is, the present invention resides in the following items (1) and (2).
(1) A functional particle pigment containing at least a dye, wherein an outside of the pigment is coated with an olefin base resin.
(2) The functional particle pigment as described in the above item (1), wherein the olefin base resin is a copolymer of norbornene.

According to the present invention, a functional particle pigment having an excellent chemical resistance is provided.

### DESCRIPTION of THE PREFERRED EMBODIMENTS

The embodiment of the present invention shall be explained below in detail.

The functional particle pigment of the present invention is characterized by that it is a functional particle pigment containing at least a dye, wherein an outside of the pigment is coated with an olefin base resin.

### Functional particle pigment:

A core/shell type microcapsule pigment comprising a core component containing at least a dye and a shell formed by a resin for coating the core component, a micro (nano) sphere pigment constituted by a resin component containing a dye, and the like are shown as the examples of the functional particle pigment of the present invention. It is a key point that an outside of the above pigments is coated with an olefin base resin, and the functional particle pigment of the present invention is produced by obtaining the functional particle pigment containing at least the dye and then coating an outside of the pigment with the olefin base resin.

In the present invention, the functional particle pigment before coating shall not specifically be restricted as long as it assumes an embodiment in which the dye is contained in the resin as a matrix of the pigment, and it includes, for example, 1) a thermally discoloring microcapsule, 2) an optically discoloring (fluorescent) microcapsule, 3) a micro (nano) sphere, and the like.

The "dye" used in the present invention is a concept representing a coloring material dissolved in a solvent, and it include, as well as coloring materials having a function of developing alone a color, coloring materials having a function of developing a color by action with other compounds though not developing alone a color.

### Thermally discoloring microcapsule:

The thermally discoloring microcapsule of 1) described above shall not specifically be restricted as long as it contains a dye which is discolored by heat such as frictional heat and the like, for example, a dye having a function of turning colorless from colored, colored from colored and colored from colorless, and various dyes can be used. It includes a microcapsulated thermally discoloring composition containing at least a leuco dye (pigment), a developer and a discoloring temperature regulator.

The leuco dye (pigment) which can be used shall not specifically be restricted as long as it is an electron donating dye and has the functions of a developer. To be specific, dyes which have so far conventionally been publicly known, such as triphenylmethane base dyes, spiropyran base dyes, fluoran base dyes, diphenylmethane base dyes, rhodaminelactam base dyes, indolylphthalide base dyes, leucoauramine base dyes, and the like can be used alone (singly) or in a mixture of two or more kinds thereof (hereinafter referred to merely as "at least one") from the viewpoint of obtaining the leuco dyes having an excellent color developing characteristic.

To be specific, it includes 6-(dimethylamino)-3,3-bis[4-(dimethylamino)phenyl]-1(3H)-isobenzofuran, 3,3-bis(p-dimethylaminophenyl)-6-dimethylaminophthalide, 3-(4-diethylaminophenyl)-3-(1-ethyl-2-methylindole-3-yl)phthalide, 3-(4-diethylamino-2-ethoxyphenyl)-3-(1-ethyl-2-methylindole-3-yl)-4-azaphthalide, 1,3-dimethyl-6-diethylaminofluoran, 2-chloro-3-methyl-6-dimethylaminofluoran, 3-dibutylamino-6-methyl-7-anilinofluoran, 3-diethylamino-6-methyl-7-anilinofluoran, 3-diethylamino-6-methyl-7-xylidinofluoran, 2-(2-chloroanilino)-6-dibutylaminofluoran, 3,6-dimethoxyfluoran, 3,6-di-n-buthoxyfluoran, 1,2-benz-6-diethylaminofluoran, 1,2-benz-6-dibutylaminofluoran, 1,2-benz-6-ethylisoamylaminofluoran, 2-methyl-6-(N-p-tolyl-N-ethylamino)fluoran, 2-(N-phenyl-N-metylamino)-6-(N-p-tolyl-N-ethylamino)fluoran, 2-(3'-trifluorometylanilino)-6-diethylaminofluoran, 3-chloro-6-cyclohexylaminofluoran, 2-metyl-6-cyclohexylaminofluoran, 3-di(n-butyl)amino-6-methoxy-7-anilinofluoran, 3,6-bis(diphenylamino)fluoran, methyl-3',6'-bisdiphenylaminofluoran, chlloro-3',6'-bisdiphenylaminofluoran, 3-methoxy-4-dodekoxystylinoquuinoline, and the like. At least one of them can be used.

The above leuco dyes have a lactone skeleton, a pyridine skeleton, a quinazoline skeleton, a bisquinazoline skeleton and the like, and the colors are developed by opening these skeletons (rings) thereof.

The developer which can be used is a component having an ability of developing the colors of the leuco dyes described above, and it includes, for example, phenol resin base compounds, salicylic acid base metal chlorides, salicylic acid resin base metal chlorides, solid acid base compounds and the like.

The developer which can be used includes, to be specific, at least one of o-cresol, tertiary butyl catechol, nonylphenol, n-octylphenol, n-dodecylphenol, n-stearylphenol, p-chlorophenol, p-bromophenol, o-phenylphenol, hexafluorobisphenol, n-butyl p-hydroxybenzoate, n-octyl p-hydroxybenzoate, resorcinol, dodecyl gallate, 2,2-bis(4'-hydroxyphenyl)propane, 4.4-dihydroxydiphenylsulfone, 1,1-bis(4'-hydroxyphenyl)ethane, 2,2-bis(4'-hydroxy-3-methylphenyl)propane, bis(4-hydroxyphenyl) sulfide, 1-phenyl-1,1-bis(4'-hydroxyphenyl)ethane, 1,1-bis(4'-hydroxyphenyl)-3-methylbutane, 1,1-bis(4'-hydroxyphenyl)-2-methylpropane, 1,1-bis(4'-hydroxyphenyl)n-hexane, 1,1-bis(4'-hydroxyphenyl)n-heptane, 1,1-bis(4'-hydroxyphenyl)n-octane, 1,1-bis(4'-hydroxyphenyl)n-nonane, 1,1-bis(4'-hydroxyphenyl)n-decane, 1,1-bis(4'-hydroxyphenyl)n-dodecane, 2,2-bis(4'-hydroxyphenyl)butane, 2,2-bis(4'-hydroxyphenyl)ethyl propionate, 2,2-bis(4'-hydroxyphenyl)-4-methylpentane, 2,2-bis(4'-hydroxyphenyl)hexafluoropropane, 2,2-bis(4'-hydroxyphenyl)n-heptane, 2,2-bis(4'-hydroxyphenyl)n-nonane, and the like.

A use mount of the developer used may be optionally selected according to the desired color density and shall not specifically be restricted, and it is usually selected in a range of suitably 0.1 to 100 parts by mass based on 1 part by mass of the leuco dye described above.

The discoloring temperature regulator which can be used is a substance for controlling the discoloring temperature in the coloration of the leuco dye and the developer each described above.

Compounds which so far been publicly known can be used as the discoloring temperature regulator which can be used, and they include, to be specific, alcohols, esters, ketones, ethers, acid amides, azomethines, fatty acids, hydrocarbons and the like.

It includes, for example, at least one of bis(4-hydroxyphenyl)phenylmethane dicaprylate (C₇H₁₅), bis(4-hydroxyphenyl)phenylmethane dilaurate (C₁₁H₂₃), bis(4-hydroxyphenyl)phenylmethane dimyristate (C₁₃H₂₇), bis(4-hydroxyphenyl)phenylethane dimyristate (C₁₃H₂₇), bis (4-hydroxyphenyl)phenylmethane dipalmitate (C₁₅H₃₀), bis(4-hydroxyphenyl)phenylmethane dibehenate (C₂₁H₄₃), bis(4-hydroxyphenyl)phenylethylhexylidene dimyristate (C₁₃H₂₇), and the like.

A use mount of the above discoloring temperature regulators may suitably be selected according to the desired hysteresis width and the desired color density in developing the color and shall not specifically be restricted, and it is usually selected in a range of preferably 1 to 100 parts by mass based on 1 part by mass of the leuco dye.

In the present invention, the thermally discoloring microcapsule of 1) described above can be produced by microcapsulating the thermally discoloring composition containing at least the leuco dye, the developer and the discoloring temperature regulator each described above so that a prescribed average particle diameter is obtained.

The microcapsulation method includes, for example, an interfacial polymerization method, an interfacial polycondensation method, an insitu polymerization method, a liquid curing coating method, a phase separation method from an aqueous solution, a phase separation method from an organic solvent, a fusion distribution cooling method, an air suspension coating method, a spray drying method, and the like. It can suitably be selected according to the uses.

In the present invention (including examples and the like described later), the "average particle diameter" is a value obtained by measuring a median diameter by means of a particle size distribution measuring equipment (Microtrac HRA9320-X100, manufactured by Nikkiso Co., Ltd.).

For example, in the phase separation method from an aqueous solution, a thermally discoloring microcapsule pigment can be produced by melting a leuco dye, a developer and a discoloring temperature regulator by heating them, then adding the molten substance to an emulsifier solution, heating and stirring it to disperse in an oil drop form, then gradually adding a resin feed as a capsule filming agent to continuously react them to prepare a dispersion and then filtrating the above dispersion.

The contents of the leuco dye, the developer and the discoloring temperature regulator described above are varied according to the kinds of the leuco dye, the developer and the discoloring temperature regulator used and the microcapsulation method applied, and they are 0.1 to 100 for the developer and 1 to 100 for the discoloring temperature regulator in terms of a mass ratio based on 1 of the leuco dye. Also, the content of the capsule filming agent is 0.1 to 1 in terms of a mass ratio based on the capsule content.

In the present invention, the coloring temperatures (for example, coloring at 0°C or higher) and the decoloring temperatures (for example, decoloring at 50°C or higher) of the respective colors in the thermally discoloring microcapsule of 1) described above can be set to suitable temperatures by suitably combining the kinds and the amounts of the leuco dye, the developer and the discoloring temperature regulator each described above, and the thermally discoloring microcapsule which turns preferably colorless from colored by heat such as frictional heat and the like can be obtained.

In the present invention, a wall film is formed preferably by a urethane resin, an epoxy resin or an amino resin in the thermally discoloring microcapsule of 1) described above from the viewpoint of the drawn line density and the storage stability. The urethane resin includes, for example, compounds formed by isocyanates and polyols. The epoxy resin includes, for example, compounds formed by epoxy resins and amines. The amino resin includes, for example, melamine resins, urea resins and benzoguanamine resins. A thickness of the wall film of the microcapsule described above is suitably determined according to a required strength of the wall film and the required drawn line density.

The suitable raw materials (the melamine resins, the urea resins and the benzoguanamine resins and the like) of the amino resin and a dispersant, a protective colloid and the like in using the respective microcapsulation methods in order to form the wall film by the amino resin.

### <Optically discoloring (fluorescent) microcapsule>

In the present invention, various compounds can be used as the optically discoloring (fluorescent) microcapsule of 2) described above, and it includes, for example, compounds obtained by microcapsulating photochromic dyes (coloring matters) and fluorescent dyes (coloring matters).

The photochromic dye which can be used includes, for example, at least one of 2,3-bis(2,4,5-trimethyl-3-thienyl)maleic acid anhydride, 2,3-bis(2,4,5-trimethyl-3-thienyl)maleimide, cis-1,2-dicyano-1,2-bis(2,4,5-trimethyl-3-thienyl)ethane, 1,2-bis[2-methylbenzo[b]thiophene-3-yl]-3,3,4,4,5,5-hexafluoro-1-cyclopentene, 1,2-bis(2,4-dimethy-5-phenyl-3-thienyl]-3,3,4,4,5,5-hexafluoro-1-cyclopentene, 1-(2-hydroxyethyl)-3,3-dimethyindolino-6'-nitrobenzopyrilospiran, 1,3,3-trimethylindolinobenzopyrilospiran, 1,3,3-trimethylindolino-6'-nitrobenzopyrilospiran, 1,3,3-trimethylindolino-6'-bromobenzopyrilospiran, 1,3,3-trimethylindolino-8'-methoxybenzopyrilospiran, 1,3,3-trimethylindolino-β-naphthopyrilospiran, 1,3,3-trimethylindolinonaphthospirooxazine, 2,3-dihydro-2-spiro-4'-[8'-aminonaphthalene-1'(4'H)-one]perimidine (including o-form), 2,3-dihydro-2-spiro-7'-[8'-imino-7',8'-dihydronaphthalene-1'-amine]perimidine, azobenzene, 3,3-diphenyl-3H-naphtho[2,1-b]pyran, 2,5-norbornadiene, thioindigo, and the like.

The optically discoloring fluorescent dye (coloring matter) which can be used includes, for example, at least one of arylamine derivatives, anthracene derivatives such as phenylanthracene derivatives, pentacene derivatives, azole derivatives such as oxadiazole derivatives, oxazole derivatives, triazole derivatives, benzoxazole derivatives, benzoazatriazole derivatives and the like, thiophene derivatives such as oligothiophene derivatives and the like, carbazole derivatives, diene derivatives such as cyclopentadiene derivatives, tetraphenylbutadiene derivatives and the like, distyrylbenzene derivatives, distyrylpyrazon derivatives, distyrylarylene derivatives, stilbene derivatives, triphenylamine derivatives, trichmanilamine derivatives, pyrazoloquinoline derivatives, hydrazone derivatives, pyrazole derivatives, pyrazoline derivatives, pyridine derivatives, porphyrin derivatives, pyrrole derivatives such as phthalocyanine derivatives, fluorene derivatives, phenanthroline derivatives, pyrene derivatives, phenanthrene derivatives, perinone derivatives, coumarin derivatives, naphthalimide derivatives, benzoxazinone derivatives, quinophthalone derivatives, rubrene derivatives, quinadoline derivatives, and the like.

In the present invention, at least one selected from the photochromic dyes (coloring matters) and the fluorescent dyes (coloring matters) each described above can suitably be used.

In the present invention, the optically discoloring (fluorescent) microcapsule of 2) described above can be produced by microcapsulating the optically discoloring composition containing at least one selected from the photochromic dyes (coloring matters) and the fluorescent dyes (coloring matters) each described above, an organic solvent, and additives such as an antioxidant, a light stabilizer a sensitizer and the like so that a prescribed average particle diameter is obtained.

A microcapsule can be prepared in the same manner as in the microcapsulation method for the thermally discoloring microcapsule described above, and for example, in the phase separation method from an aqueous solution, an optically discoloring microcapsule meeting the object and having a property in which it is colorless under an indoor lighting environment and in which it is colored under a UV irradiation environment can be produced by melting a photochromic dye (coloring matter) and the like together with an organic solvent such as diethylene glycol, methyl ethyl ketone, phenyl glycol and the like by heating them, then adding the molten substance to an emulsifier solution, heating and stirring it to disperse in an oil drop form, then gradually adding a resin feed used as a capsule filming agent, for example, an amino resin solution, to be specific, the respective solutions such as a methylolmelamine aqueous solution, a urea solution, a benzoguanamine solution and the like to continuously react them to prepare a dispersion and then filtrating the above dispersion.

### <Micro (nano) sphere>

In the present invention, the micro (nano) sphere of 3) described above includes colored resin particles obtained by dissolving at least a dye in a resin and micronizing it.

The dye which can be used includes, for example, oil-soluble dyes, disperse dyes, direct dyes, basic dyes and the like, and the oil-soluble dyes and the disperse dyes are preferred from the viewpoint that they can be stably contained in the resins.

The oil-soluble dye includes, for example, at least one of Solvent Black, Solvent Red, Solvent Blue, Solvent Yellow, Solvent Green and the like.

The disperse dye includes, for example, at least one of Disperse Black, Disperse Red, Disperse Blue, Disperse Yellow, Disperse Green and the like.

The resin which can be used includes, for example, at least one of vinyl base resins such as styrene resins, vinylnaphthalene resins, vinyl chloride resins and the like, olefin base resins such as ethylene resins, propylene resins, isobutylene resins and the like, acryl base resins such as methyl acrylate resins, ethyl acrylate resins, methyl methacrylate resins, ethyl methacrylate resins and the like, and urethane base resins.

In the present invention, the micro (nano) sphere of 3) described above can be produced by granulating the composition containing at least the dye and the resin each described above. For example, the dye and the resin are dissolved in an organic solvent, and then the solution is emulsified and dispersed in water. Next, the solvent described above is removed, whereby the micro (nano) sphere can be produced.

### <Coating method>

In the present invention, the functional particle pigment which meets the object is obtained by coating an outside of the pigment containing at least the dye such as the thermally discoloring microcapsule of 1), the optically discoloring microcapsule of 2) and the micro (nano) sphere of 3) each described above with the olefin base resin.

The coating method includes A) a method in which the functional particle pigment described above and a solution prepared by dissolving an olefin base resin in an oil based solvent are dispersed in an aqueous medium and in which the oil based solvent is then removed by heating, reducing a pressure and the like to deposit the olefin base resin to form a coating layer of the olefin base resin on an outside (outer surface) of the pigment, B) a method in which the functional particle pigment described above is dispersed in a solution prepared by dissolving an olefin base resin in an oil based solvent and in which the oil based solvent is removed by heating, reducing a pressure and the like to thereby form a coating layer on an outside (outer surface) of the pigment described above, and C) a method in which a coating layer of an olefin base resin is formed on an outside (outer surface) of the pigment described above by dry shock treatment (so-called hybridization).

The olefin base resin for forming a coating layer by coating includes, for example, homopolymers of olefins such as polyethylene, polypropylene and the like, copolymers such as ethylene-vinyl acetate copolymers, ethylene-vinyl alcohol copolymers, ethylene-(meth)acrylic acid copolymers, ethylene-(meth)acrylic acid ester copolymers and the like, and alicyclic olefin base resins.

Homo- or copolymers (for example, polymers having alicyclic hydrocarbon groups such as three-dimensionally rigid tricyclodecane) of cyclic olefins (norbornene, cyclopentadiene and the like), copolymers (ethylene-norbornene copolymers, propylene-norbornene copolymers and the like) of the cyclic olefins described above and copolymerizable monomers can be shown as the examples of the alicyclic olefin base resin. The alicyclic olefin base resins may be non-substituted resins, or may be resins in which hydrogens thereof are substituted with other groups.

The copolymers of norbornene are preferably used as the olefin base resin from the viewpoint of obtaining the functional particle pigment having a very high chemical resistance, and they may be either of polymers (homopolymers) having a single repetitive unit and polymers (copolymers) having two or more norbornene base repetitive units.

The above copolymers of norbornene include, for example, (1) addition (co)polymers of norbornene base monomers obtained by subjecting the norbornene base monomers to addition (co)polymerization, (2) addition copolymers of norbornene base monomers with ethylene and α-olefins, (3) addition polymers such as addition copolymers of norbornene base monomers with non-conjugated monomers and, if necessary, other monomers, (4) ring-opened (co)polymers of norbornene base monomers, and resins obtained by, if necessary, hydrogenating the above (co)polymers, (5) ring-opened (co)polymers of norbornene base monomers with ethylene and α-olefins, and resins obtained by, if necessary, hydrogenating the above (co)polymers, and (6) ring-opened copolymers of norbornene base monomers with non-conjugated dienes or other monomers, and ring-opened polymers such as polymers obtained by, if necessary, hydrogenating the above copolymers. The above polymers include random copolymers, block copolymers, alternating copolymers and the like.

The above copolymers of norbornene can be obtained by all publicly known polymerization methods such as, for example, ring-opening metathesis polymerization (ROMP), combination of ROMP with hydrogenation reaction, polymerization by a radical or a cation, polymerization using a cationic palladium polymerization initiator, polymerization using other polymerization initiators (for example, polymerization initiators of nickel and other transition metals), and the like. Further, commercial products can be used if available. Capable of being used as the commercial products are, for example, a trade name "TOPAS" manufactured by TOPAS ADVANCED POLYMERS Gmbh, Germany and commercially available from Polyplastics Co., Ltd., a trade name "ARTON" manufactured by and commercially available from JSR Corporation, trade names "ZEONOR" and "ZEONEX" manufactured by and commercially available from Zeon Corporation, a trade name "APEL" manufactured by and commercially available from Mitsui Chemicals, Inc., and the respective grades thereof.

In the coating method of A) described above, the functional particle pigment which meets the object can be produced by a method in which the functional particle pigment and a solution prepared by dissolving the olefin base resin such as the copolymer of norbornene described above in the oil based solvent are dispersed in an aqueous medium and in which the oil based solvent is then removed by heating, reducing a pressure and the like to deposit the olefin base resin described above on an outer surface of the functional particle pigment to form a coating layer of the olefin base resin.

The oil based solvent which can be used in the method described above shall not specifically be restricted and includes, for example, benzene, isoprene, hexane, heptane, cyclohexane, isobutyl formate, methyl acetate, ethyl acetate, dipropyl ether, dibutyl ether, ethanol, allyl alcohol, 1-prpanol, 2-prpanol, t-butyl alcohol, acetone, ethyl methyl ketone, N,N-dimethylforamide, acetonitrile, and the like. They may be used alone or in combination of two or more kinds thereof.

The aqueous medium which can be used shall not specifically be restricted, and aqueous media prepared by adding, for example, an emulsifier, a dispersion stabilizer and the like to water are used. The emulsifier described above shall not specifically be restricted and includes, for example, alkylsulfuric acid sulfonic acid salts, alkylbenzenesulfonic acid salts, alkylsulfuric acid triethanolamine, polyoxyethylene alkyl ether and the like. The dispersion stabilizer described above shall not specifically be restricted and includes, for example, polyvinyl alcohol, polyvinylpyrrolidone, polyethylene glycol and the like.

A method in which the oil based solvent is removed to deposit the olefin base resin such as the copolymer of norbornene in the method described above is preferably a method for heating the dispersion at 30 to 70°C, more preferably a method for reducing a pressure in addition to heating so that the pressure is 0.095 to 0.080 MPa.

In the coating method of B) described above, the functional particle pigment which meets the object can be produced by a method in which the functional particle pigment described above is dispersed in a solution prepared by dissolving the olefin base resin such as the copolymer of norbornene described above in the oil based solvent and in which the oil based solvent is removed by heating, reducing a pressure and the like to thereby form a coating layer of the olefin base resin on an outer surface of the functional particle pigment.

In the above coating method, the oil based solvent and heating, reducing a pressure and the like which are used in B) described above can be used as the oil based solvent and a method in which the oil based solvent is removed by heating, reducing a pressure and the like.

In the coating method of C) described above, the functional particle pigment which meets the object can be produced by a method in which the fine particles (fine powders having an average particle diameter of less than an average particle diameter of the functional particle pigment described above) of the olefin base resin such as the copolymer of norbornene described above are adhered on an outer surface of the functional particle pigment and in which these microcapsules are then allowed to collide each other in an air flow or provided with a mechanical impact to form a coating layer of the olefin base resin on an outer surface of the functional particle pigment described above by the above collision or impact.

A method for adhering the fine powders of the olefin base resin such as the copolymer of norbornene described above on the outer surface of the functional particle pigment includes a method in which the microcapsules and the fine powders of the olefin base resin such as the copolymer of norbornene described above are subjected to dry blending, that is, mixed and stirred in a dry state and in which they are adhered by electricity generated frictionally in the above state on the functional particle pigment. The mechanical impact can be applied by means of a dry surface modifying equipment.

In the respective coating methods of A) to C) described above, the coating methods of A) and B) are preferably carried out from the viewpoints of an easiness of coating and the cost.

In the present invention, a thickness of the coating layer constituted by the olefin base resin such as the copolymer of norbornene described above formed on the outer surface of the functional particle pigment can be set in a suitable range according to the uses of thermosensitive recording materials, inks for writing instruments, inks for stamps, inks for ink jet, inks for printing and the like, and it is suitably determined according to the required chemical resistance and the other performances (prescribed performances such as a preservability, a light fastness, a coloring property and the like).

A thickness of the coating layer is calculated from a difference between the outer diameters before and after coating, and a value of (after coating/before coating) falls in a range of preferably 1.1 to 10. If it is less than 1.1, the effects of the present invention are not obtained in a certain case, and if it exceeds 10, the coloring power is reduced in a certain case.

In the present invention (including example described later and the like), a thickness of the coating layer constituted by the olefin base resin such as the copolymer of norbornene described above formed on the outer surface of the functional particle pigment is a value calculated from the values of the average particle diameters before and after coating measured by means of a particle size distribution measuring device.

A size (average particle diameter) of the functional particle pigment according to the present invention which is coated on an outer surface with the olefin base resin such as the copolymer of norbornene described above can be set in a suitable range according to the uses of thermosensitive recording materials, inks for writing instruments, inks for stamps, inks for ink jet, inks for printing and the like.

A thickness of the coating layer constituted by the olefin base resin such as the copolymer of norbornene described above formed on the outer surface of the functional particle pigment by coating can suitably be controlled by suitably setting the olefin base resin such as the norbornene copolymer used in the respective coating methods of A) to C) described above, or the use amounts of a radically polymerizable olefin base monomer and a watersoluble radical polymerization initiator used in the polymerization, the use amounts of the respective components used (the oil based solvent, the aqueous medium and the like), the respective conditions of heating, reducing in a pressure and the like, or the dry impact treating conditions.

The functional particle pigment thus constituted according to the present invention is a pigment containing at least the dye in the resin which is a base material, and the functional particle pigment which is excellent in a chemical resistance without losing the performances of the coloring material due to decomposition of the dye even under conditions in which chemicals are present is obtained by coating an outside of the pigment with the olefin base resin, particularly the copolymer of norbornene.

The functional particle pigment of the present invention is excellent in a chemical resistance without losing the performances of the coloring material due to decomposition of the dye even under conditions in which chemicals are present. Accordingly, it can suitably be used as a coloring material used for thermosensitive recording materials, inks for writing instruments, inks for stamps, inks for ink jet, inks for printing and the like, and thermosensitive recording materials, ink compositions for writing instruments, ink compositions for stamps, ink compositions for ink jet, ink compositions for printing and the like can be obtained by suitably combining the respective publicly known blend components for the respective uses to prepare the compositions.

For example, in the ink compositions for writing instruments, the functional particle pigment having the constitution described above, solvents (an aqueous solvent and an oil based solvent) and additives for writing instruments are mixed in suitable contents, and the mixtures can suitably be used as aqueous ink compositions for writing instruments such as ballpoint pens, marking pens and the like, oil based ink compositions, gel ink compositions and the like.

Also, in the ink compositions for printing, the functional particle pigment having the constitution described above, solvents (an aqueous solvent and an oil based solvent) and additives for printing inks are mixed in suitable contents, and the mixtures can suitably be used for relief printing, intaglio printing, offset printing, stencil printing and the like.

### EXAMPLES

Next, the present invention shall be explained in further details with reference to examples and comparative examples, but the present invention shall not be restricted to the examples and the like shown below. "Parts" shown in the following examples mean "parts by mass".

### Example 1: formulation of functional particle pigment of thermally discoloring microcapsule pigment type:

A pigment 1 (thermally discoloring microcapsule) was obtained according to the following prescription.

Methyl-3',6'-bisdiphenylaminofluoran 1 part as a leuco dye, 1,1-bis(4-hydroxyphenyl)cyclohexane 2 parts as a developer and bis(4-hydroxyphenyl)phenylmethane dicaprylate 24 parts as a discoloring temperature regulator were molten by heating at 100°C to obtain a homogeneous composition 27 parts.

Isocyanate 10 parts and polyol 10 parts were added as a capsule filming agent to a homogeneous hot solution of the composition 27 parts obtained above, and they were stirred and mixed. Then, a 12% polyvinyl alcohol aqueous solution 60 parts was used as a protective colloid to emulsify the mixture at 25°C, whereby a dispersion was prepared. Next, the dispersion was treated with 5 parts of polyamine of 5 % at 80°C for 60 minutes to obtain a microcapsule.

The microcapsulated aqueous dispersion obtained according to the procedure described above was subjected to spray drying, whereby it was turn into a powder form to produce a pigment 1 (thermally discoloring microcapsule).

Next, the pigment 1 (thermally discoloring microcapsule) obtained above was used to coat an outside of the shell with an olefin base resin according to the following method, whereby a coating layer was formed on an outer surface of the pigment 1 (thermally discoloring microcapsule) to produce the thermally discoloring microcapsule pigment of Example 1. Coating method:
A norbornene•ehtylene copolymer 0.5 part was added to a mixed solvent 99.5 parts of hexane : cyclohexane = 1 : 1 and dissolved therein by stirring, and then the pigment 1 described above 2.5 parts was added thereto and sufficiently dispersed. Next, the dispersion was subjected to spray drying to thereby turn it into a powder form to form a coating layer of the norbornene•ehtylene copolymer on an outer surface of the pigment 1 (thermally discoloring microcapsule) to produce the thermally discoloring microcapsule pigment of Example 1.

The aqueous dispersion obtained according to the procedure described above was subjected to spray drying to thereby turn it into a powder form to form a coating layer of the norbornene•ehtylene copolymer on an outer surface of the pigment 1 (thermally discoloring microcapsule) to produce the functional particle pigment (average particle diameter: 1.75 µm, thickness of a coating layer: 3.5) of a thermally discoloring microcapsule pigment type of Example 1.

### Example 2: formulation of functional particle pigment of optically discoloring microcapsule pigment type:

A pigment 2 (optically discoloring microcapsule) was obtained according to the following prescription.

1,3,3-Trimethylindolino-6'-(1-piperidinyl)spironaphthozazine 3 parts as an optically discoloring dye, diethylene glycol dibenzoate 10 parts and methyl ethyl ketone 10 parts were molten by heating at 80°C to obtain a homogeneous composition 23 parts.

Isocyanate 10 parts and polyol 10 parts were added as a capsule filming agent to a homogeneous hot solution of the composition 23 parts obtained above, and they were stirred and mixed. Then, a 12 % polyvinyl alcohol aqueous solution 60 parts was used as a protective colloid to emulsify the solution at 25°C, whereby a dispersion was prepared. Next, the dispersion was treated with 5 parts of polyamine of 5 % at 80°C for 60 minutes to obtain a microcapsule.

The microcapsulated aqueous dispersion obtained according to the procedure described above was subjected to spray drying to thereby turn it into a powder form to produce a pigment 2 (optically discoloring microcapsule).

Next, the pigment 2 (optically discoloring microcapsule) obtained above was used to coat an outside of the shell with the norbornene•ehtylene copolymer according to the coating method described above to form a coating layer on an outer surface of the optically discoloring microcapsule to produce the functional particle pigment (average particle diameter: 4.6 µm, thickness of a coating layer: 5.8) of an optically discoloring microcapsule type of Example 2.

### Example 3: formulation of functional particle pigment of micro (nano) sphere pigment type:

C. I. Solvent-Blue 70; 10 parts was dissolved in acetone 190 parts to prepare a dye solution. Next, the dye solution was added to ion-exchanged water 2,000 parts while stirring to obtain an oil base dye fine particle slurry.

Then, the slurry was subjected to an evaporator to remove acetone and a part of water by distillation. Next, a membrane filer of 0.5 µm was used to filtrate the slurry under vacuum, and the filtrate was condensed and washed with water to obtain the slurry of 100 parts in terms of a total liquid amount.

A solution prepared by dissolving a styrene acryl resin 5 parts in sodium hydroxide 10 parts of 1 mol/kg and an ammonium salt 1 part of polyoxyethylene distyrenated phenyl ether sulfuric acid ester were added to the slurry 100 parts described above, and the mixture was dispersed by means of a supersonic homogenizer.

Next, hydrochloric acid of 1 mol/kg was added to the liquid obtained above while stirring to obtain a precipitate. The above precipitate was filtrate and washed with ion-exchanged water to obtain 100 parts of a wet cake. A sodium hydroxide aqueous solution 5 parts of 1 mol/kg was added to the above wet cake and dispersed by means of a supersonic homogenizer. Further, the dispersion was filtrated through a millipore filter to remove coarse particles, and ion-exchanged water was added to the filtrate to obtain an aqueous dispersion of a functional particle pigment.

The aqueous dispersion obtained according to the procedure described above was subjected to spray drying to thereby turn it into a powder form to produce a pigment 3 (micro (nano) sphere).

Next, the pigment 3 (micro (nano) sphere) obtained above was used to coat an outside of the shell with the norbornene•ehtylene copolymer according to the coating method described above to form a coating layer, whereby produced was the functional particle pigment (average particle diameter: 2 µm, thickness of a coating layer: 2.2) of a (micro (nano) sphere) type of Example 3.

### Example 4: formulation of functional particle pigment:

A functional particle pigment (average particle diameter: 3.2 µm, thickness of a coating layer: 6.4) of a thermally discoloring microcapsule pigment type of Example 4 was produced, except that in the pigment 1 of Example 1 described above, a coating layer of polypropylene in place of the norbornene•ehtylene copolymer used for the coating layer described above was formed on an outer surface of the pigment 1.

### Comparative Examples 1 to 3

The respective pigments 1 to 3 (the pigments which were not subjected to coating treatment) obtained in Examples 1 to 3 described above were used in Comparative Examples 1 to 3.

The respective functional particle pigments obtained in Examples 1 to 4 and Comparative Examples 1 to 3 described above were used to evaluate a chemical resistance according to the following evaluating method. The results thereof are shown in the following Table 1.

### Evaluating method of chemical resistance:

Hypochlorous acid was dropwise added to the functional particle pigments obtained to evaluate a chemical resistance according to the following evaluation criteria.

### Evaluation criteria:

○: No change in a hue
△: A little change in a hue is observed
X: A large change in a hue is observed

**Table 1**

| | Example | | | | Comparative Example | | |
|---|---|---|---|---|---|---|---|
| | 1 | 2 | 3 | 4 | 1 | 2 | 3 |
| Chemical resistance | ○ | ○ | ○ | Δ | X | X | X |

As apparent from the results shown in Table 1 described above, it has become clear that the respective functional particle pigments obtained in Examples 1 to 4 falling in the scope of the present invention are excellent in a chemical resistance to a satisfactory and sufficiently high extent as compared with the respective functional particle pigments obtained in Comparative Examples 1 to 3 falling outside the scope of the present invention.

### Industrial Applicability

The functional particle pigments of the present invention can suitably be used as a coloring material used for thermosensitive recording materials, inks for writing instruments, inks for stamps, inks for ink jet, inks for printing and the like.

## Claims

1. A functional particle pigment containing at least a dye, wherein an outside of the pigment is coated with an olefin base resin.

2. The functional particle pigment as described in claim 1, wherein the olefin base resin is a copolymer of norbornene.
